# EUROPEAN PATENT SPECIFICATION

(11) **EP 2 703 706 B1**
(45) Date of publication and mention of the grant of the patent: **19.04.2017**
(21) Application number: 12183024.4
(22) Date of filing: 04.09.2012
(51) Int. Cl.: F16J 15/02, E03F 3/04, F16L 21/03, F16L 25/00

(54) **Sealing ring for concrete pipes**
Dichtungsring für Betonrohre
Bague d'étanchéité pour conduites en béton

(43) Date of publication of application: 05.03.2014
(73) Proprietor: Trelleborg Pipe Seals Lelystad BV, 8218 NJ Lelystad (NL)
(72) Inventor: Andrzej, Pilszczek, 8242 VE Lelystad (NL)
(74) Representative: Flügel Preissner Schober Seidel

(56) References cited:
- EP-A2- 1 477 718
- WO-A1-02/40909

## Description

The present invention relates to a sealing ring for sealing an annular gap between a concrete pipe socket and a concrete pipe spigot end. The sealing ring comprises a radially outer holding portion for connecting the sealing ring to the concrete pipe socket and a radially inner sealing portion comprising a sealing layer for contacting the spigot end. Furthermore, an axially outer inserting portion is provided. The sealing ring comprises a plurality of cavities being separated by ribs and is formed of at least a first material and a second material, the first material having a lower hardness than the second material.

Sealing rings of this kind are used when concrete pipes are connected to form larger pipe systems. The sealing rings seal gaps between the concrete pipes, in particular within connections of the socket-and-spigot type. Frequently considered parameters of such sealing rings are required insertion force, negative axial force and permissible geometric tolerance of the socket and the spigot, among others. WO 02/40909 A1 discloses a sealing ring for sealing an annular gap between a concrete pipe socket and a concrete pipe spigot end, comprising all the features of the preamble of claim 1. Concrete is a fairly brittle material. Furthermore, the concrete pipes that are joined together to form a larger pipe system are quite heavy. Care has to be taken that the pipes are not damaged during assembly. In particular, impact of the pipes on the other is to be avoided. Accordingly, sealing rings of the above-mentioned type are usually specified to be used in a very restricted set of configurations, so that assembly of the pipes will be successful.

Sealing rings of the above-mentioned kind are also supposed to support the casting process off the concrete pipes. In particular, they should seal off any leaks of concrete between themselves and a mould that they are used in.

The present invention is based on the problem of increasing versatility and reliability of sealing rings of the kind mentioned above.

As a solution a sealing ring of the kind mentioned above is proposed, wherein the sealing portion and the ribs are made of the first material and the holding portion is made of the second material.

This way, the holding portion, which is made of the second material, has a higher hardness than the first material and can provide a secure and solid connection to the concrete of the pipe socket. The sealing portion and the ribs, which are made of the first material, are softer, and thus can more easily be deformed to clasp around the spigot end. In particular, the sealing portion will much better conform itself to the surface of the spigot end. Since the sealing portion and the ribs are well deformable, large differences in diameter of the socket and the spigot can be compensated.

Advantageous embodiments of the invention are object of the sub claims.

The first material may advantageously be a soft rubber material and the second material may be a hard rubber material. Rubber is a proven compound of sealing rings that can withstand high pressures and a wide variety of physical and chemical influences. It provides the sealing ring with a long lifespan and reliability.

The second material may be a recycled material. Using recycled material not only makes production of the sealing ring more cost-effective but also helps to reduce waste and other negative effects on the environment.

The sealing portion and the holding portion may advantageously be formed integrally as a single piece by co-extrusion. Co-extrusion provides a strong and secure bond between the co-extruded materials. Furthermore, it avoids tearing in the vicinity of where the two different materials meet.

A slurry lip may be provided on the sealing portion and may protrude radially inwards from the sealing portion. The slurry lip will contact the mould when the concrete pipe is cast and will prevent concrete from leaking onto the sealing layer 18. Thus, reliability of the sealing ring is improved.

The slurry lip may be made of the first material. The slurry lip will then be easily deformable and will easily conform to the surface of the mould.

The slurry lip may be supported by a bent portion of the holding portion. When the concrete is poured on the sealing ring with this support of the slurry lip, the slurry lip will be more intensely pressed against the mould and thus better seal any concrete leaks.

The cavity closest to the inserting portion may have an at least partially circular cross-section. The properties of the first material together with the possibility of squeezing the circular cross-section will allow for larger tolerances inner diameter of the pipes.

An advantageous embodiment of the current invention will be explained with reference to the accompanying schematic drawings. The drawings show in detail:
- Fig. 1: a cross-section of an annular sealing ring in accordance with an embodiment of the present invention;
- Fig. 2: the sealing ring of figure 1 when it has been cast into a concrete pipe socket and
- Fig. 3: the sealing ring of figure 2 when the spigot end has been inserted into the pipe socket and thus into the sealing ring.

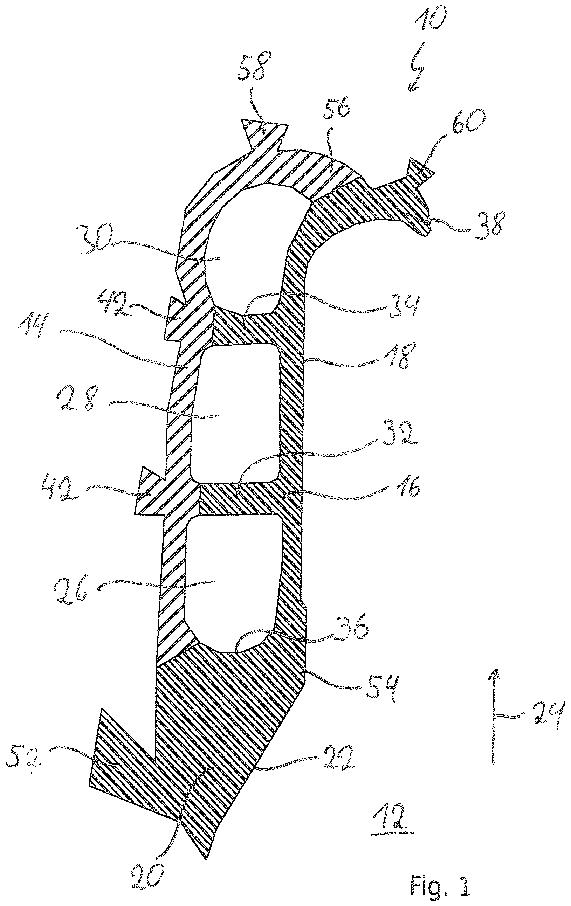

A cross-section of a sealing ring 10 is shown in a relaxed state, i.e. when no pressure is applied to it, in Fig. 1. The sealing ring 10 has an annular shape and is adapted for use in concrete pipe socket-and-spigot joints. The sealing ring 10 is made from a cord that has the same cross-section as shown in Fig. 1. The extruded cord is cut and then bent into an annular shape such that its ends meet. The ends are then connected to each other, e.g. by splicing, so that the sealing ring 10 is formed.

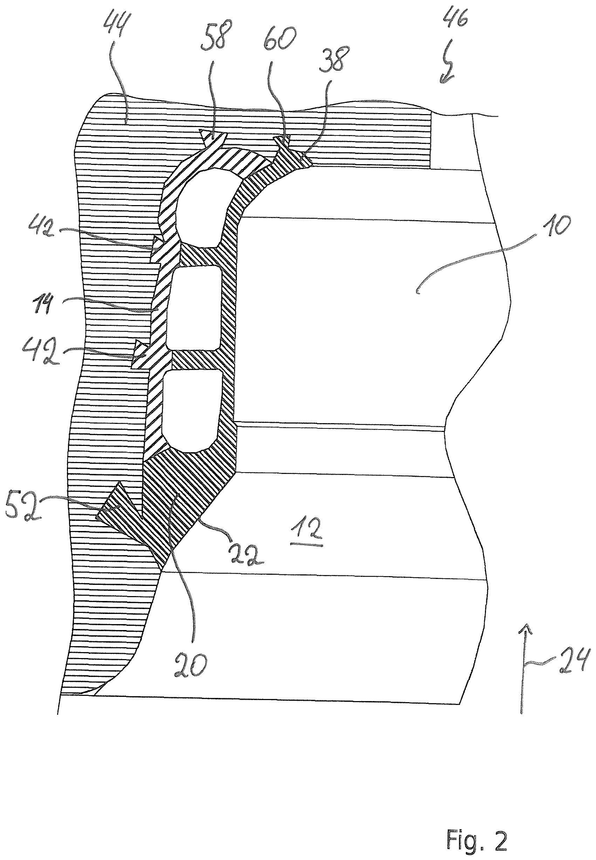

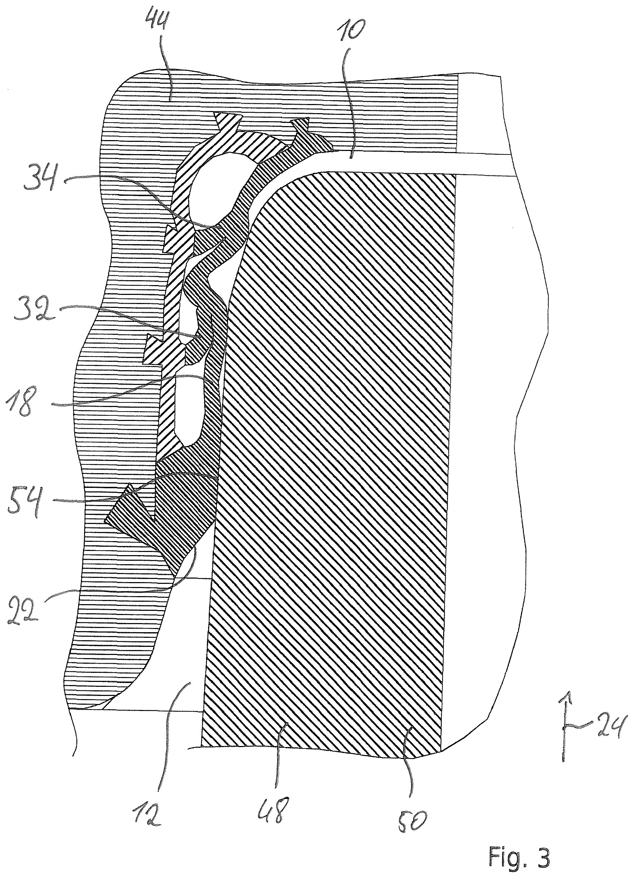

The sealing ring 10 is usually incorporated into a concrete pipe 46 as shown in Fig. 2. To this end, the sealing ring 10 is placed in the mould that is used for casting the concrete pipe. The concrete for forming the pipe 46 will then be allowed to flow into the mould. When the concrete hardens, the sealing ring 10 will be linked to the socket 44 of the concrete pipe 46. As shown in Fig. 3, the spigot end 48 of another concrete pipe 50 may then be inserted into an insertion opening 12 of the sealing ring 10 in an insertion direction 24.

The sealing ring 10 is provided with an annular holding portion 14 located in a radially outer section of the sealing ring 10. The holding portion 14 allows anchoring the sealing ring 10 in the concrete of the pipe socket 44. It provides a hard shell as a solid support base for the rest of the sealing ring 10 and keeps the sealing ring 10 in position during casting of the concrete pipe 46.

The sealing ring 10 further comprises a sealing portion 16, which is located radially inwards from the holding portion 14. The sealing portion 16 comprises a sealing layer 18 which is adapted to form a seal with the pipe spigot end 48 when it comes in contact with it.

Furthermore, the sealing portion 16 comprises an inserting portion 20. The inserting portion 20 is formed around the insertion opening 12 and tapers towards a centre axis of the sealing ring 10 when viewed in the insertion direction 24. The inserting portion 20 thus provides a guiding surface 22 that will centre and align a pipe spigot end 48 upon insertion.

The sealing portion 16 further borders on cavities 26, 28, 30 which are separated by ribs 32, 34. The cavity 26 which is located closest to the insertion portion 20 of the cavities 26, 28, 30, has a tolerance section 36 which has a circular cross-section. Due to the generally annular shape of the sealing ring 10, part of a surface of the cavity 26 has a toric shape.

At an end of the sealing portion 16 that is furthest in the direction of insertion 24, a slurry lip 38 is provided which protrudes radially inwards. The slurry lip 38 is used for sealing off any gaps between the sealing ring 10 and the mould when the concrete pipe 46 is cast and the concrete is flowing into the mould. In this way, the slurry lip 38 keeps concrete from flowing onto radially inner surfaces of the sealing layer 18. When the sealing layer 18 is covered with concrete, the sealing may be impaired or not work at all. The slurry lip 38 is anchored in the concrete by the retaining member 60, which is oriented slightly radially inwards from the insertion direction 24. In particular, the retaining member 60 will be inclined by 10° to 40° relative to the insertion direction 24.

To keep the slurry lip 38 in position during casting, the holding portion 14 comprises a slurry lip support 56. The slurry lip support 56 is formed by a section of the holding portion 14 that bows radially inwards around the cavity 30 to make contact with the sealing portion 16. Where the slurry lip support 56 and the slurry lip 38 make contact, the slurry lip 38 is also curved radially inwards. The slurry lip support 56 is bowed such that it supports the slurry lip 38 against pressure in the insertion direction 24.

The sealing portion 16 is made of a first rubber material which is softer than the second material. The first rubber material needs to be able to form a seal between the socket end 44 and the spigot end 48. The holding portion 14 is made of a second rubber material that mainly needs to be strong enough to securely hold the sealing ring 10 in place in the concrete of the concrete pipe 46.

Fig. 2 shows the sealing ring 10 when it has been cast into the socket end 44. To hold the sealing ring 10 securely in the concrete, it is provided with retaining members 42, 52, 58, 60. The retaining members 42, 52, 58, 60 have a dovetail shape and are distributed over an axially outer surface of the sealing ring 10, on the inserting portion 20 and on the slurry lip 38. When the spigot end 48 is inserted into the insertion opening 12, the bulk of insertion forces is supported by the guiding surface 22 of the inserting portion 20. The inserting portion 20 is rooted in the concrete by the retaining member 52, in particular so that it does not peel off the concrete of the socket 44.

The retaining member 52 is not oriented perpendicular to the insertion direction 24 as is the case with the retaining members 42. Rather, the retaining member 52 has an inclination of 45° with respect to the insertion direction 24. This allows the retaining member 52 to better accept and counter the forces that the spigot end 48 may exert on the sealing ring 10 while it is being guided into the insertion opening 12 by the guiding surface 22.

To facilitate forming of this seal, a sealing stamp 54 is provided shaped as an annular bump which protrudes slightly from the sealing layer 18 in a radially inwards direction. The sealing stamp 54 is positioned on the sealing portion 16 such that it overlaps the cavity 26 with its tolerance section 36 when viewed in the radial direction as well as abuts the guiding surface 22.

The first material of the sealing portion 16 should be flexible and should be able to conform very closely to the surface of the spigot end 48 when the spigot end 48 is inserted into the sealing ring 10.

Insertion of the spigot end 48 into the sealing ring 10 may be a delicate procedure since the pipes 46, 50 are heavy and due to concrete being a brittle material, collisions and pressure between surfaces of the pipes 46, 50 may break the pipes 46, 50. To allow for secure insertion of the spigot end 48, insertion forces and pushback during the insertion procedure should be well-defined.

To this end, the first material is fairly soft to reduce insertion and/or assembly forces and pushback. Furthermore, the first material is a comparatively high quality rubber that conforms very precisely and narrowly to specifications. In this way, the forces required to insert the spigot end 48 into the sealing ring 10 can be precisely predicted and the insertion procedure can be tailored to the properties of the sealing ring 10.

The second material is only used to create the holding portion 14. The holding potion 14 does not come in contact with the spigot end 48. It is not required to be soft or precisely specified for the sealing ring 10 to work. It is, however, required to be harder than the first material in order to be able to anchor the sealing ring 10 in the concrete of the socket 44. Since it only marginally influences insertion force and pushback, its properties may be specified with wider tolerances. This allows the reuse of material and for nonstandard rubber to be used, in particular recycled or reformed/re-vulcanized rubber.

During production of sealing rings 10, there is a large amount of high quality rubber used for forming the sealing portion 16 that is superfluous, not used in the final product and usually scrapped. As this scrapped rubber can be recycled and used as a second material for forming the holding portion 14, the sealing ring 10 helps to reduce waste so that its production process becomes more environmentally friendly.

In the sealing ring 10, the first material has a hardness of 50 IRHD and the second material has a hardness of 70 IRHD. Generally acceptable hardness values for the first material lie between 40 to 60 IRHD, preferably between 45 to 55 IRHD. Generally acceptable hardness values for the second material lie between 60 to 80 IRHD, preferably between 65 to 75 IRHD.

The second material should adhere well to the first material so that the durability of the sealing ring 10 is assured. As shown above, the second material will not necessarily come in contact with the content of the pipe. Accordingly, the second material may have a lower chemical resistance than the first material. Moreover, the second material will not be used in the sealing portion. Thus, the second material does not necessarily need to fulfil the same strict standards as the first material, in particular with respect to sealing capabilities. The second material does not need to be rubber. Other materials usable as the second material include plastic materials like EPDM, PP, PET or TPE.

When the spigot end 48 of the concrete pipe 50 is inserted into the insertion opening 12 in the insertion direction 24, as it is shown in Fig. 3, it is guided by the guiding surface 22. The spigot end 48 has an exterior diameter that is larger than the inner diameter of the sealing ring 10. Thus, when it is inserted into the sealing ring 10, it will come in contact with and compress the sealing layer 18, in particular the sealing stamp 54. In the process, the sealing layer 18 as well as the ribs 32, 34 are deformed.

The ribs 32, 34 are connected to the holding portion 14 on a radially inner surface. When the ribs 32, 34 are deformed due to the spigot end 48 being inserted into the sealing ring 10, they exert forces and torque on the holding portion 14. This in particular leads to shear forces within the holding portion 14.

To reduce the influence of the forces and the torque transmitted by the ribs 32, 34, the retaining members 42 are positioned radially on the outside of the holding portion 14 across from where the ribs 32, 34 make contact with the holding portion 14. By this arrangement, the forces and torque exerted by the ribs 32, 34 are countered by the retaining member 42 and are transmitted to the concrete of the socket 44. The holding portion 14 will thus only be locally subject to such stress.

To anchor the sealing ring 10 well, the retaining members 42, 52, 58, 60 have a dovetail shape. A width of the retaining members 42 is comprised between 100% of a width of the ribs 32, 34 at their thinnest and 120% of the width of the ribs 32, 34 at their thickest cross-section. The width of the retaining members 42 may be varied. Acceptable values lie within 80% to 150% of the width of the ribs 32, 34, however, values within 90% to 130% are preferred.

Although the retaining members 42, 52, 58, 60 have a dovetail shape in the present embodiment, it is possible to use different shapes, e.g. a T-shape or a circular shape. For certain applications, the retaining members 42, 52, 58, 60 may be barbed or serrated as well. To avoid excess shear forces, it may be advisable to around the angles of the retaining members 42, 52, 58, 60 for certain applications.

The present embodiment of the sealing ring 10 has 3 cavities 26, 28, 30. Although this number of cavities is preferred, it is possible to provide fewer or more cavities, in particular 2, 4, 5 or 6 cavities.

The central cavity 28 has a substantially rectangular shape. The angles of the rectangular shape are rounded so they appear to be partially circular cross-sections. The partially circular cross-sections do not extend over more than 20% of any side of the rectangular shape. Any of the cavities 26, 28, 30 may be shaped in this way.

The tolerance section 36 comprises a partly circular cross-section. In particular, the tolerance section 36 has a cross-section that is shaped like a half circle. However, instead of 180° of a full circle, the tolerance section 36 may comprise a cross-section that comprises between 120° to 200° of a circle.

The wall of the tolerance section 36 consists partly of the first material and partly of the second material. Between 90% and 50% of the wall of the tolerance section 36 are made from the first material, preferably 85% to 80%. This will ensure that the torrent section 36 is soft enough to provide geometric tolerance to compensate for variations in the diameter of the spigot end 48.

The retaining member 52 may be inclined by 30° to 60°, preferably by 40° to 50° with respect to the insertion direction 24.

The sealing ring 10 of the present invention provides a fault-tolerant seal and joint for use in concrete pipe systems of the bell-and-spigot type.

### List of reference signs

- 10: sealing ring
- 12: insertion opening
- 14: holding portion
- 16: sealing portion
- 18: sealing layer
- 20: inserting portion
- 22: guiding surface
- 24: insertion direction
- 26: cavity
- 28: cavity
- 30: cavity
- 32: rib
- 34: rib
- 36: tolerance section
- 38: slurry lip
- 42: retaining member
- 44: socket
- 46: concrete pipe
- 48: spigot end
- 50: concrete pipe
- 52: retaining member
- 54: sealing stamp
- 56: slurry lip support
- 58: retaining member
- 60: retaining member

## Claims

1. A sealing ring (10) for sealing an annular gap between a concrete pipe socket (44) and a concrete pipe spigot end (48), said sealing ring (10) comprising a radially outer holding portion (14) for connecting the sealing ring (10) in the concrete, a radially inner sealing portion (16) and a plurality of cavities (26, 28, 30) being separated by ribs (32, 34), wherein the sealing ring (10) is formed of at least a first material and a second material, the first material having a lower hardness than the second material, **characterised in that** said sealing portion (16), comprising a sealing layer (18) for contacting the spigot end (48), an axially outer inserting portion (20) and a radially inward protruding slurry lip (38), and said ribs (32, 34) are made of the first material and that only said holding portion (14), which does not come into contact with the spigot end (48), is made of said second material.

2. Sealing ring according to claim 1, **characterised in that** the first material is a soft rubber material and the second material is a hard rubber material.

3. Sealing ring according to claim 1 or 2, **characterised in that** the second material is a lower quality material than the first material, in particular a recycled material.

4. Sealing ring according to any of the preceding claims, **characterised in that** the sealing portion (16) and the holding portion (14) are integrally formed as one piece by co-extrusion.

5. Sealing ring according to any of the preceding claims, **characterised in that** the slurry lip (38) is supported by a bent portion of the holding portion (14).

6. Sealing ring according to any of the preceding claims, **characterised in that** the cavity (26) closest to an insertion opening (12) has an at least partially circular cross-section.

## Patentansprüche

1. Dichtring (10) zum Dichten eines ringförmigen Spalts zwischen einer Betonrohrmuffe (44) und einem Betonrohrspitzende (48), wobei der Dichtring (10) einen radial äußeren Haltebereich (14) zum Verbinden des Dichtrings (10) in dem Beton, einen radial inneren Dichtbereich (16) und eine Mehrzahl von Hohlräumen (26, 28, 30) aufweist, die durch Rippen (32, 34) getrennt sind, wobei der Dichtring (10) aus wenigstens einem ersten Material und einem zweiten Material gebildet ist, wobei das erste Material eine geringere Härte aufweist als das zweite Material, **dadurch gekennzeichnet, dass** der Dichtbereich (16) eine Dichtungsschicht (18) zum Kontaktieren des Spitzendes (48), einen axial äußeren Einführbereich (20) und eine radial nach innen vorstehende Schlammlippe (38) aufweist und dass die Rippen (32, 34) aus dem ersten Material hergestellt sind und dass nur der Haltebereich (14), welcher nicht mit dem Spitzende (48) in Kontakt kommt, aus dem zweiten Material hergestellt ist.

2. Dichtring nach Anspruch 1, **dadurch gekennzeichnet, dass** das erste Material ein weiches Gummimaterial ist und das zweite Material ein hartes Gummimaterial ist.

3. Dichtring nach Anspruch 1 oder 2, **dadurch gekennzeichnet, dass** das zweite Material ein Material von geringerer Qualität ist als das erste Material, insbesondere ein Recyclingmaterial.

4. Dichtring nach einem der vorstehenden Ansprüche, **dadurch gekennzeichnet, dass** der Dichtbereich (16) und der Haltebereich (14) durch Koextrusion als ein Stück integral ausgebildet sind.

5. Dichtring nach einem der vorstehenden Ansprüche, **dadurch gekennzeichnet, dass** die Schlammlippe (38) durch einen gebogenen Bereich des Haltebereichs (14) abgestützt ist.

6. Dichtring nach einem der vorstehenden Ansprüche, **dadurch gekennzeichnet, dass** der Hohlraum (26), der einer Einführöffnung (12) am nächsten ist, einen wenigstens teilweise kreisförmigen Querschnitt aufweist.

## Revendications

1. Bague d'étanchéité (10) pour étancher un intervalle annulaire entre une extrémité femelle (44) de tube en béton et une extrémité mâle (48) de tube en béton, ladite bague d'étanchéité (10) comprenant une portion de maintien radialement extérieure (14) pour connecter la bague d'étanchéité (10) dans le béton, une portion d'étanchéité radialement intérieure (16) et une pluralité de cavités (26, 28, 30) qui sont séparées par des nervures (32, 34), dans laquelle la bague d'étanchéité (10) est formée d'au moins un premier matériau et un second matériau, le premier matériau ayant une dureté plus faible que le second matériau,
**caractérisée en ce que** ladite portion d'étanchéité (16) comprend une couche d'étanchéité (18) pour venir en contact avec l'extrémité mâle (48), une portion d'insertion axialement extérieure (20) et une lèvre anti boues (38) en projection radialement vers l'intérieur, et lesdites nervures (32, 34) sont faites du premier matériau, et **en ce que** seule ladite portion de maintien (14), qui ne vient pas en contact avec l'extrémité mâle (48) est faite dudit second matériau.

2. Bague d'étanchéité selon la revendication 1, **caractérisée en ce que** le premier matériau est un matériau en caoutchouc tendre et le second matériau est un matériau en caoutchouc dur.

3. Bague d'étanchéité selon la revendication 1 ou 2, **caractérisée en ce que** le second matériau est un matériau de plus faible qualité que le premier matériau, en particulier un matériau recyclé.

4. Bague d'étanchéité selon l'une quelconque des revendications précédentes, **caractérisée en ce que** la portion d'étanchéité (16) et la portion de maintien (14) sont formées de manière intégrale d'une seule pièce par coextrusion.

5. Bague d'étanchéité selon l'une quelconque des revendications précédentes, **caractérisée en ce que** la lèvre anti boues (38) est supportée par une portion cintrée de la portion de maintien (14).

6. Bague d'étanchéité selon l'une quelconque des revendications précédentes, **caractérisée en ce que** la cavité (26) la plus proche d'une ouverture d'insertion (12) a une section transversale au moins partiellement circulaire.
